Europäisches Patentamt

European Patent Office

Office européen des brevets

(19)

(11) Veröffentlichungsnummer: **0 211 248 B1**

(12) **EUROPÄISCHE PATENTSCHRIFT**

(45) Veröffentlichungstag der Patentschrift: 27.02.91

(51) Int. Cl.⁵: **B60N 2/36**

(21) Anmeldenummer: 86109161.9

(22) Anmeldetag: 04.07.86

(54) Sitzverstellung in einem Kraftwagen.

(30) Priorität: 30.07.85 DE 3527152

(43) Veröffentlichungstag der Anmeldung:
25.02.87 Patentblatt 87/09

(45) Bekanntmachung des Hinweises auf die
Patenterteilung:
27.02.91 Patentblatt 91/09

(84) Benannte Vertragsstaaten:
DE FR IT SE

(56) Entgegenhaltungen:
DE-A- 2 358 193        DE-A- 3 306 188
FR-A- 2 524 285        GB-A- 506 220
GB-A- 2 095 984        US-A- 4 475 763

PATENT ABSTRACTS OF JAPAN, Band 2, Nr.
213 (M-167)[1091], 26. Oktober 1982; & JP-
A-57 118 938 (TOYO KOGYO K.K.) 24-07-1982

(73) Patentinhaber: **Bayerische Motoren Werke Aktiengesellschaft**
**Patentabteilung AJ-30 Postfach 40 02 40 Petuelring 130**
**D-8000 München 40(DE)**

(72) Erfinder: **Ziebart, Wolfgang, Dr.**
**Waldschmidtstrasse 12b**
**D-8132 Tutzing(DE)**
Erfinder: **Schüch, Siegmund**
**Kagererstrasse 4a**
**D-8000 München 80(DE)**
Erfinder: **Heitl, Ladislaus**
**Aschaffenburgstrasse 32**
**D-8201 Raubling(DE)**

(74) Vertreter: **Dexheimer, Rolf**
**Bayerische Motoren Werke Aktiengesellschaft Postfach 40 02 40 Petuelring 130 -**
**AJ-31**
**D-8000 München 40(DE)**

## Beschreibung

Die Erfindung bezieht sich auf einen Rücksitz für Kraftwagen nach dem Oberbegriff des Patentanspruchs 1.

Ein bekannter derartiger Rücksitz (GB-A-2 095 984) weist eine Rückenlehne auf, die mit ihrem unteren Rand an zwei Scharnierplatten angelenkt ist, die sich nur in ihrer hintersten Extremlage über Gummipuffer an der Karosserie abstützen. Die Rückenlehne ist nur parallel zu sich verlagerbar, was die variationsmöglichkeiten hinsichtlich des Kofferraumvolumens einschränkt. Zum anderen dürfte auch die Fixierung des unteren Randes der Rückenlehne insbesondere bei Belastungen in Längsrichtung des Fahrzeuges unbefriedigend sein.

Der Erfindung liegt die Aufgabe zugrunde, einen Rücksitz für Kraftfahrzeuge zu schaffen, der noch mehr Möglichkeiten zur Einstellung bietet und in jeder eingestellten Position eine sichere Fixierung der Rückenlehne gegenüber der Karosserie gewährleistet.

Diese Aufgabe wird erfindungsgemäß bei einem Rücksitz für Kraftwagen nach dem Oberbegriff des Patentanspruchs 1 dadurch gelöst, daß die Scharnierplatte in mehreren Schwenklagen arretierbar ist. Auf diese Weise läßt sich in kleinen Schritten der Kofferraum des Fahrzeuges nach vorne erweitern. In jeder Einstellung ist eine sichere Festlegung der Rückenlehne möglich, so daß auch bei stärkeren Verzögerungen des Fahrzeuges schwere Gegenstände sicher im Kofferraum zurückgehalten werden. Das Arretieren des unteren Rückenlehnenrandes in mehreren Schwenklagen ermöglicht es ferner, die Sitzfläche des Fahrzeugsitzes zur Anpassung an die Körpergröße und dem Körperbau der Sitzbenutzer sehr genau und den Komfortansprüchen entsprechend einzustellen. Bei einer flachen Neigung der Rückenlehne kann sich der Sitzbenutzer weiter zurücklehnen und ggf. auch eine Schlafstellung einnehmen.

Eine bevorzugte Weiterbildung der Erfindung ist durch eine obere Scharnierplatte gekennzeichnet, die hinter dem oberen Rand der Rückenlehne um eine karosseriefest angeordnete Schwenkachse schwenkbar angelenkt ist und die einen Führungsschlitz für eine obere Schwenkachse der Rückenlehne aufweist. Auf diese Weise läßt sich die Neigung der Rückenlehne auch dann noch variieren und das Kofferraumvolumen noch schrittweise erweitern, wenn der untere Rand der Rückenlehne schon in einer vorderen Stellung ist.

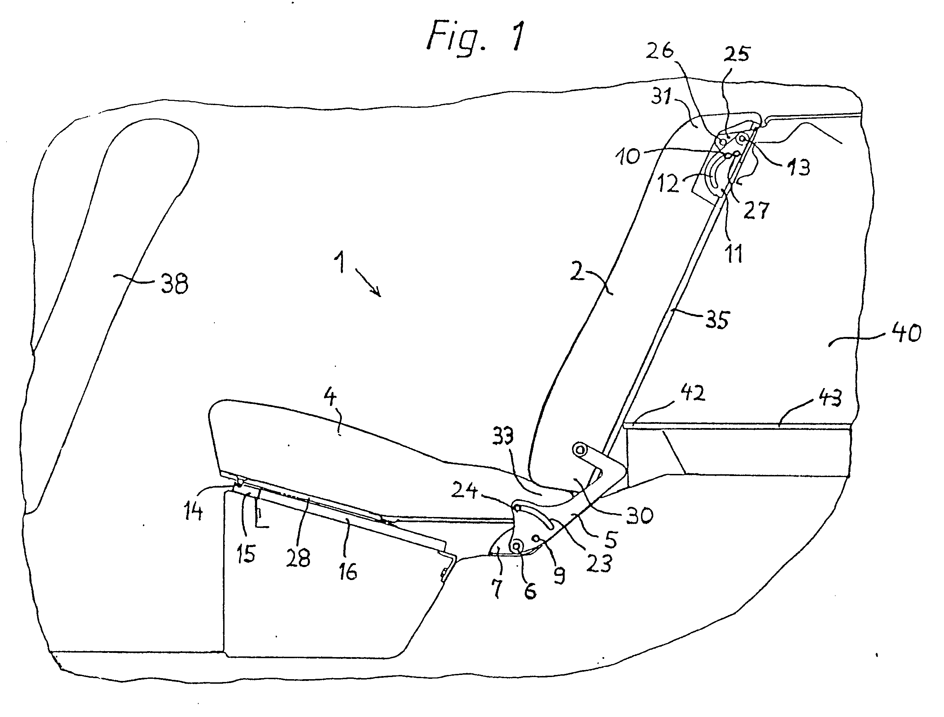

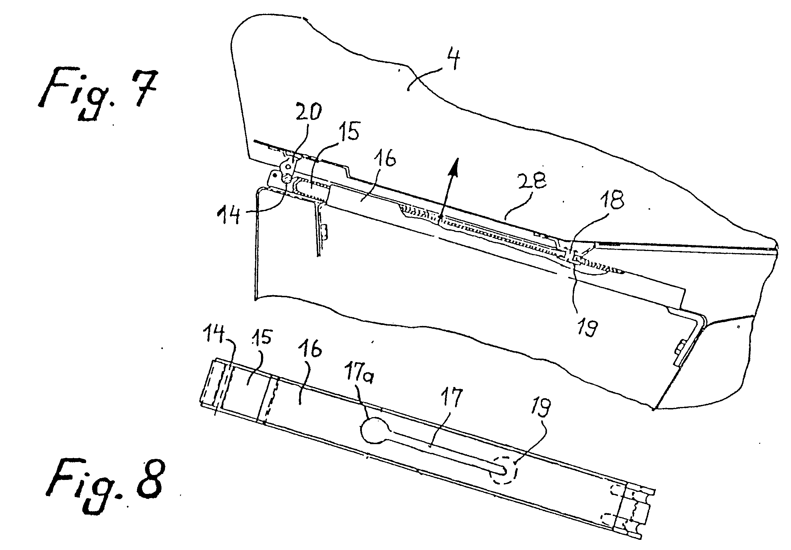

Weitere vorteilhafte Einzelheiten der Erfindung, die Gegenstand von weiteren Unteransprüchen sind, sind im folgenden anhand der Zeichnung dargestellt. Es zeigen die Fig. 1 bis 6 jeweils einen Ausschnitt des Innenraumes eines Kraftwagens mit dem Rücksitz und dem vorderen Teil des Laderaumes in Seitenansicht bei unterschiedlichen Stellungen des Rücksitzes und die Fig. 7 bis 10 Einzelheiten eines Verstellmechanismus zum Verschieben und Hochklappen des Sitzpolsters des Rücksitzes.

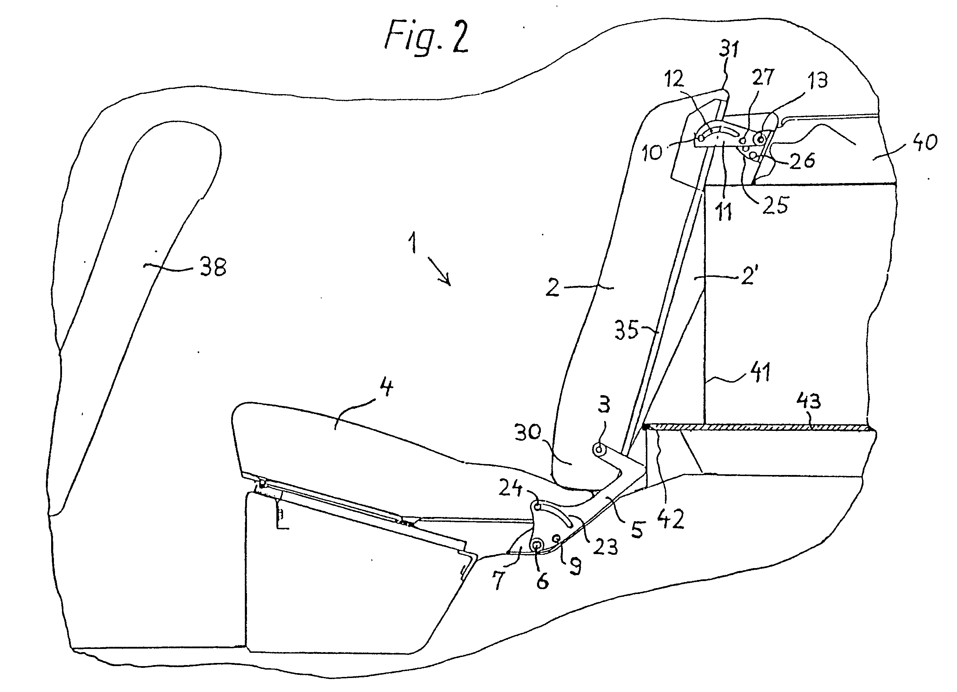

Bei der aus den Fig. 1 bis 6 ersichtlichen Ausführungsform weisen die Rücksitze 1 jeweils ein gesondertes Sitzpolster 4 und eine gesonderte Rückenlehne 2 bzw. 2' auf und sind individuell verstellbar. Die einzelnen Verstellmöglichkeiten sind nur für den in den Fig. 1 bis 6 vorderen Rücksitz 1 dargestellt, wohingegen der in den Fig. 1 bis 6 hintere Rücksitz, wie aus den Fig. 2 bis 6 durch seine Rückenlehne 2' ersichtlich, die Rücksitzposition aus Fig. 1 beibehält.

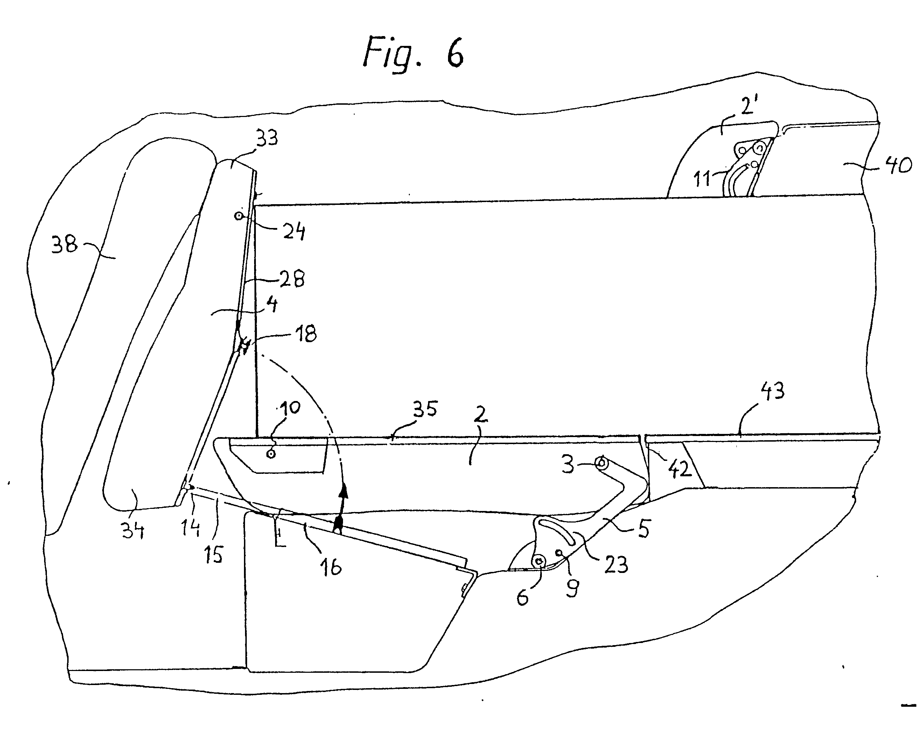

Die Sitzpolster 4 der Rücksitze 1 liegen tiefer als die Bodenplatte 43 des von der Rückplatte 35 der Rückenlehnen 2 der Rücksitze 1 nach vorn begrenzten Laderaumes 40 des Kraftwagens. Die Rückenlehnen 2 sind jeweils um eine untere Schwenkachse 3, die im Bereich des unteren Randes 30 der Rückenlehnen 2 angeordnet ist, an einer Scharnierplatte 5 schwenkbar angelenkt, die ihrerseits schwenkbar an einer karosseriefesten Arretierplatte 7 um eine Schwenkachse 6 schwenkbar angelenkt ist, die im Abstand unterhalb der unteren Schwenkachse 3 der Rückenlehnen 2 angeordnet ist. In der Arretierplatte 7 sind mehrere Sperrlöcher 8 zum Arretieren der unteren Scharnierplatte 5 in mehreren Schwenkstellungen mittels eines durch die untere Scharnierplatte 5 und die karosseriefeste Arretierplatte 7 hindurchsteckbarem Sperrbolzens 9 auf einem Kreisbogen um die Schwenkachse 6 der unteren Scharnierplatte 5 verteilt angeordnet. Im Bereich des oberen Randes 31 der Rückenlehnen 2 ist eine seitlich vorstehende obere Schwenkachse 10 angeordnet, die in einen gebogen verlaufenden Führungsschlitz 12 einer oberen Scharnierplatte 11 eingreift, welche ihrerseits an einer karosseriefesten oberen Arretierplatte 25 um die Schwenkachse 13 schwenkbar angelenkt ist. Die obere Arretierplatte 25 weist ebenfalls mehrere Sperrlöcher 26 zur Arretierung der oberen Scharnierplatte 11 in mehreren Schwenkstellungen mittels eines Sperrbolzens 27 auf. Das Sitzpolster 4 der Rücksitze 1 ist mit dem vorderen unteren Rand seiner Bodenplatte 28 über eine vordere Schwenkachse 14 am beweglichen Teleskopteil 15 einer Teleskopschiene 15, 16 schwenkbar angelenkt, deren festes Teleskopteil 16 am Gestell der Rücksitze 1 festgelegt ist, so daß das Sitzpolster 4 der Rücksitze 1 unabhängig von deren Rücklehnen 2 nach vorn verschoben werden kann und dann mit seinem hinteren Rand 33 nach oben gegen die Rückenlehne 38 des Vordersitzes des Kraftwagens hochgeklappt werden kann (Fig. 6). In der Normalstellung des Sitzpolsters 4 greift dieses jedoch mit einem an seinem hinteren Rand 33 seitlich abstehenden Führungsbolzen 24 in einen Führungsschlitz 23 ein, der in der unteren Scharnierplatte 5 entlang eines Kreisbogens verläuft, dessen Krümmungsmittelpunkt in der Schwenkachse 6 der unteren Scharnierplatte 5 liegt.

Die Grundstellung der Rücksitze 1 ist aus Fig. 1 ersichtlich. Das Sitzpolster 4 befindet sich in seiner hintersten Stellung. Die untere Scharnierplatte 5 ist vollständig zurückgeschwenkt und in dieser Stellung mittels des Sperrbolzens 5 verriegelt. Die obere Schwenkplatte 11 ist vollständig nach unten geschwenkt und in dieser Lage mittels des Sperrbolzens 27 verriegelt. Die Rückenlehne 2 nimmt daher die hinterste Stellung ein, in welcher sie auf dem hinteren Rand 33 des Sitzpolsters 4 aufsitzt und schräg nach hinten geneigt mit ihrer Rückplatte 35 an dem Vorderrand 42 der Bodenplatte 43 des Laderaumes 40 anliegt.

Gemäß Fig. 2 ist die Rückenlehne 2 des einen Rücksitzes 1 steiler eingestellt als nach Fig. 1, wohingegen die Rückenlehne 2' des anderen Rücksitzes 1 ihre Grundstellung beibehalten hat. Die steilere Stellung der Rückenlehne kenlehne 2 wird dadurch erreicht, daß die obere Scharnierplatte 11 nach dem Lösen des Sperrbolzens 27 durch Nachvornziehen des oberen Randes 31 der Rückenlehne 2 in die oberste Schwenklage geschwenkt und dort mittels des Sperrbolzens 27 und des obersten Sperrloches 26 der Arretierplatte 25 wieder arretiert wird. Bei dieser Bewegung wird die Rückenlehne 2 um ihre untere Schwenkachse 3 verschwenkt, wobei die obere Schwenkachse 10 der Rückenlehne 2 den gebogenen Führungsschlitz 12 in der oberen Scharnierplatte 11 bis zum Anliegen am vorderen Ende des Führungsschlitzes 12 durchläuft. Durch das Steilerstellen der Rückenlehne 2 des zugeordneten Rücksitzes 1 kann hinter diesen in dem Laderaum 40 z.B. eine hohe Kiste 41 untergebracht werden, die aufgrund ihrer Höhe bei einer Stellung der Rückenlehne 2 nach Fig. 1 nicht weit genug auf der Bodenplatte 43 des Laderaumes 40 hätte nach vorn geschoben werden können, um das Schließen der Heckklappe des Kraftwagens zu ermöglichen. Trotz des Unterbringens der Kiste 41 im Laderaum 40 steht der Rücksitz 1 mit der steiler gestellten Rückenlehne 2 weiterhin als Sitzplatz zur Verfügung.

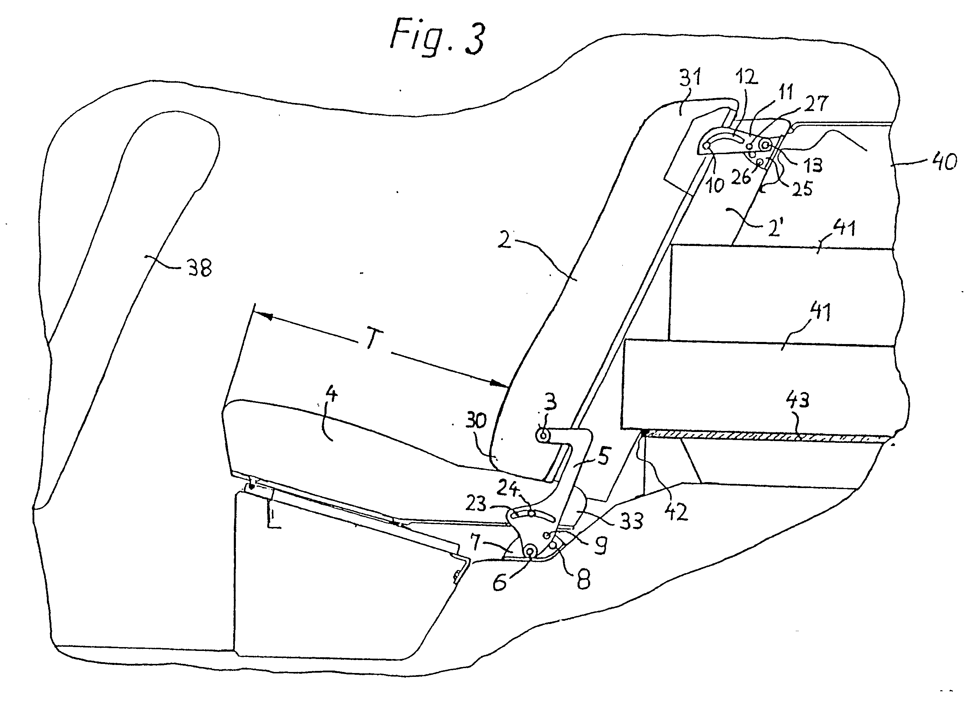

Aus der Einstellung der Rückenlehne 2 aus Fig. 2 heraus wird die Einstellung der Rückenlehne 2 nach Fig. 3 dadurch erreicht, daß die untere Schwenkplatte 5 nach dem Lösen des Sperrbolzens 9 nach oben geschoben wird wodurch die untere Schwenkachse 3 der Rückenlehne 2 mitsamt deren unterem Rand 30 gegenüber dem seine Lage beibehaltenden Sitzpolster 4 nach vorn verlagert wird. In dieser Lage der unteren Scharnierplatte 5 wird diese durch Einstecken des Sperrbolzens 9 in das nächste Sperrloch 8 der Arretierplatte 7 wieder verriegelt. Während dieser Verstellbewegung der Rückenlehne 2 wird diese um ihre obere Schwenkachse 10 verschwenkt, wohingegen das stehenbleibende Sitzpolster 4 mit seinem Führungsbolzen 24 in dem Führungsschlitz 23 der unteren Scharnierplatte 5 gleitet. In dieser Stellung der Rückenlehne 2 ist der Laderaum 40, wie aus Fig. 3 ersichtlich, zusätzlich vergrößert, so daß beispielsweise zwei längere Kisten 41 in dem Laderaum 40 untergebracht werden können und bis über den vorderen Rand 42 der Bodenplatte 43 des Laderaumes 40 hinaus vorgeschoben werden können. Gleichzeitig aber ist die Sitztiefe des Sitzpolsters 4 auf das Maß T verkürzt, wohingegen die Neigung der verstellten Rückenlehne 2 wieder mit derjenigen in der Grundstellung aus Fig. 1 übereinstimmt. Die verkürzte Sitztiefe T führt insbesondere bei jugendlichen Fahrzeuginsassen dazu, daß diese eine günstigere Sitzposition einnehmen. Da gleichzeitig das Sitzpolster 4 seine ursprüngliche Lage beibehält, ist jedoch der Knieraum zwischen dem vorderen Rand des Sitzpolsters 4 und der Rückenlehne 38 des davorstehenden Vordersitzes unverändert geblieben.

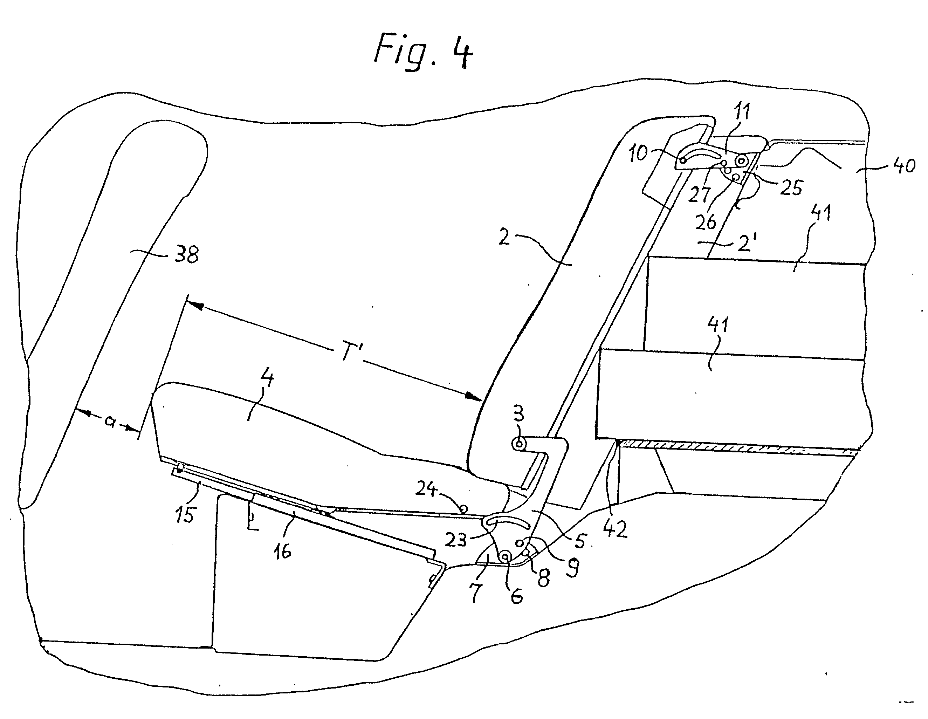

Jedoch kann man entsprechend Fig. 4 mit Hilfe der Teleskopschiene 15, 16 nach Lösen einer Verriegelung, die in der Zeichnung nicht dargestellt ist, und nach dem Aushängen des Führungsbolzens 24 aus dem Führungsschlitz 23 der unteren Scharnierplatte 5 das Sitzpolster 4 nach vorne ziehen, so daß die ursprüngliche Sitztiefe T' wieder erreicht ist, entsprechend allerdings auch der Abstand a zwischen dem Sitzpolster 4 und der Rückenlehne 38 des Vordersitzes verkleinert ist.

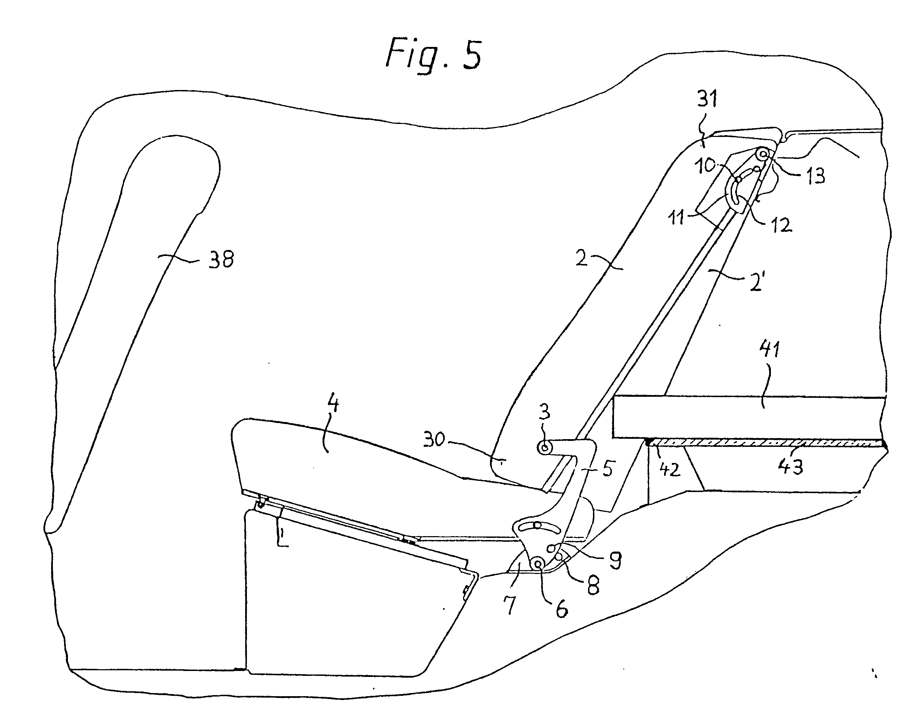

Die Sitzeinstellung nach Fig. 5 kann man aus der Grundstellung aus Fig. 1 dadurch erreichen, daß die untere Scharnierplatte 5 in der zu Fig. 3 erläuterten Weise nach oben geschwenkt wird und dadurch der untere Rand 30 der Rückenlehne 2 gegenüber dem Sitzpolster 4 nach vorn verlagert wird. Da hierbei die obere Scharnierplatte 11 in der Grundstellung verbleibt und die obere Schwenkachse 10 der Rückenlehne 2 zurückhält, gleitet die obere Schwenkachse 10 in dem Führungsschlitz 12 nach unten und dreht sich dabei entsprechend der relativen Schwenkverstellung der Rückenlehne 2 um die obere Schwenkachse 10. Wie aus Fig. 5 ersichtlich, kann in dieser Stellung der Rückenlehne 2 auf der Bodenplatte 43 des Laderaumes 40 ein flaches, aber langes Ladegut 41 untergebracht werden. Unabhängig davon eignet sich jedoch die aus Fig. 5` ersichtliche Stellung der Rückenlehne 2 dazu, daß der Fahrzeuginsasse sich weiter zurücklehnen kann, beispielsweise eine Schlafstellung einnehmen kann.

In der Stellung des Sitzes nach Fig. 6 ist die volle Laderaumvergrößerung des Laderaumes 40 dadurch erreicht, daß das Sitzpolster 4 bei in der Grundstellung entsprechend Fig. 1 befindlicher Rückenlehne 2 nach Aushängen seines Führungsbolzens 24 aus dem Führungsschlitz 23 der unteren Scharnierplatte 5 mit Hilfe der Teleskopschiene 15, 16 ganz nach vorne geschoben wurde und dann um die vordere Schwenkachse 14 gegen die Rückenlehne 38 des Vordersitzes hochgeklappt wurde, so daß der normalerweise hintere Rand 33 des Sitzpolsters oben liegt, wonach die Rückenlehne 2 nach Aushängen ihrer oberen Schwenkachse 10 aus der oberen Scharnierplatte 11 hinter dem hochgeklappten Sitzpolster 4 bis in die Horizontallage abgeklappt wurde, in welcher von der Rückplatte 35 der Rückenlehne 2 die Bodenplatte 43 des Laderaumes 40 nach vorn verlängert wird. Dadurch kann in dem Laderaum 40 eine hohe und lange Kiste 41 eingeladen werden, die mit ihrem vorderen Ende bis zu der Bodenplatte 28 des hochgeklappten Sitzpolsters 4 reicht. Gleichzeitig jedoch ist der andere Rücksitz erhalten geblieben, was in Fig. 6 durch die Position der Rückenlehne 2' des anderen Rücksitzes dargestellt ist.

Die Einzelheiten der Teleskopschiene 15, 16 und des Anlenkmechanismus des Sitzpolsters 4 an dem beweglichen Teil 15 der Teleskopschiene 16 ist aus den Fig. 7 bis 10 ersichtlich. Die Teleskopschiene besteht aus einem feststehenden Teleskopteil 16, das an dem karosseriefesten Gestell des Rücksitzes festgelegt ist, und aus einem in dem feststehenden Teleskopteil 16 verschiebbaren beweglichen Teleskopteil 15, an dessen freiem Ende die Bo denplatte 28 des Sitzpolsters 4 über eine Schwenklasche 20 angelenkt ist, so daß das Sitzpolster 4 um die Schwenkachse 14 in die Stellung aus Fig. 6 hochgeschwenkt werden kann. Das Hochklappen des Sitzpolsters 4 ist jedoch nur in der voll ausgefahrenen Stellung der Teleskopschiene 15, 16 möglich. Hierzu ist, wie aus Fig. 8 ersichtlich, in dem feststehenden Teleskopteil 16 an der Oberseite ein in Längsrichtung des Teleskopteils 16 verlaufender Verriegelungsschlitz 17 ausgebildet, dessen vorderes Ende 17a verbreitert ausgeführt ist, und ist an der Unterseite der Bodenplatte 28 des Sitzpolsters 4 ein nach unten abstehender Kopfbolzen 18 festgelegt, der mit seinem Kopf 19 die Ränder des Verriegelungsschlitzes 17 normalerweise untergreift. In einer Position der Teleskopschiene 15, 16 und damit des Sitzpolsters 4 jedoch, in welcher der Kopfbolzen 18 beim Ausfahren des beweglichen Teleskopteils 15 aus dem feststehenden Teleskopteil 16 das verbreiterte Ende 17a des Verriegelungsschlitzes 17 erreicht hat, kann der Kopfbolzen 18 durch Hochklappen des Sitzpolsters 4 aus dem Verriegelungsschlitz 17 austreten.

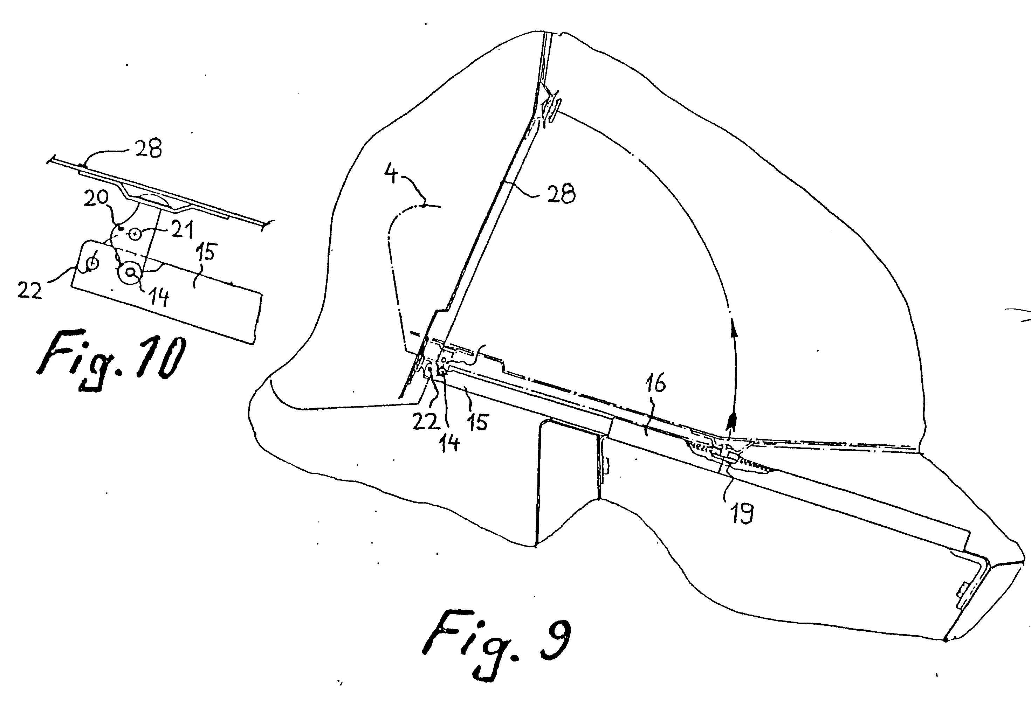

Wie weiter aus den Fig. 9 und 10 ersichtlich, kann das hochgeklappte Sitzpolster 4 am vorderen Ende des beweglichen Teleskopteils 15 der Teleskopschiene in der hochgeklappten Stellung verriegelt werden. Hierzu ist in der Schwenklasche 20 und am vorderen Ende des beweglichen Teleskopteils 15 je ein Sperrloch 21, 22 ausgebildet. Die Sperrlöcher 21, 22 sind so angeordnet, daß sie einander in der hochgeklappten Stellung des Sitzpolsters 4 überdecken, so daß durch die Sperrlöcher 21, 22 ein Sperrbolzen (nicht gezeigt) gesteckt werden kann, der das hochgeschwenkte Sitzpolster 4 verriegelt.

Wenn auch die Anwendung der Erfindung insbesondere für ein viersitziges Fahrzeug beschrieben wurde, so ist sie trotzdem auch für fünfsitzige Fahrzeuge geeignet.

## Ansprüche

1. Rücksitz für Kraftwagen, insbesondere vier- oder fünfsitzigen Personenkraftwagen, mit wenigstens einer verstellbaren Rückenlehne (2), die an ihrem oberen Randbereich (31) um eine quer verlaufende Schwenkachse (10) gegenüber der Fahrzeugkarosserie schwenkbar und mit ihrem unteren Rand (30) unabhängig von dem Sitzpolster (4) des Fahrzeugsitzes nach vorn verlagerbar sowie um eine untere querverlaufende Schwenkachse (3) gegenüber einer an der Karosserie angelenkten Scharnierplatte (5) schwenkbar ist, dadurch gekennzeichnet, daß die Scharnierplatte (5) in mehreren Schwenklagen arretierbar ist.

2. Rücksitz nach Anspruch 1, gekennzeichnet durch eine obere Scharnierplatte (11), die hinter dem oberen Rand (31) der Rückenlehne (2) um eine karosseriefest angeordnete Schwenkachse (13) schwenkbar angelenkt ist und die einen Führungsschlitz (12) für die eine obere Schwenkachse (10) der Rückenlehne (2) aufweist.

3. Rücksitz nach Anspruch 2, dadurch gekennzeichnet, daß die obere Schwenkachse (10) der Rückenlehne (2) von der oberen Scharnierplatte (11) lösbar ist.

4. Rücksitz nach Anspruch 1, dadurch gekennzeichnet, daß das Sitzpolster (4) des Sitzes (1) unabhängig von der Rückenlehne (2) nach vorn verschiebbar ist.

5. Rücksitz nach Anspruch 4, dadurch gekennzeichnet, daß in der nach vorn verschobenen Stellung des Sitzpolsters (4) dieses mit seinem hinteren Rand (33) nach oben schwenkbar ist und die Rückenlehne (2) um die untere Schwenkachse (3) hinter dem nach oben geschwenkten Sitzpolster (4) nach vorn abklappbar ist.

6. Rücksitz nach Anspruch 5, dadurch gekennzeichnet, daß das Sitzpolster (4) mittels einer Teleskopschiene (15, 16) verschiebbar geführt ist, deren beweglicher Teleskopteil (15) am unteren Vorderrand (34) des Sitzpolsters (4) angelenkt ist und in deren feststehendem Teleskopteil (16) ein Verriegelungsschlitz (17) ausgebildet ist, in den ein Kopfbolzen (18), der an der Unterseite (Bodenplatte 28) des Sitzpolsters (4) absteht, mit seinem Kopf (19) eingreift, der bei nach vorn verschobenem Sitzpolster (4) aus dem Verriegelungsschlitz (17) aushebbar ist.

7. Rücksitz nach Anspruch 6, dadurch gekennzeichnet, daß das Sitzpolster (4) in der nach oben geschwenkten Stellung an seinem Vorderrand (34) arretierbar ist.

8. Rücksitz nach einem der Ansprüche 1 bis 7, für einen viersitzigen Personenkraftwagen, dessen Laderaum nach vorn von den Rücksitzen begrenzt ist, dadurch gekennzeichnet, daß jeder Rücksitz (1) eine gesonderte Rückenlehne (2) aufweist und individuell durch das Verstellen der Rückenlehne (2) bzw. des Sitzplsters (4) verstellbar ist.

**Claims**

1. A backseat for passenger vehicles, especially 4-seater or 5-seater passenger cars, having at least one adjustable backrest (2) the top edge region (31) of which is pivotable about a transverse axis (10) relative to the vehicle body while its bottom edge (30) is movable forward independently of the cushion (4) on the vehicle seat and is pivotable about a bottom transverse axis (3) relative to a hinge plate (5) pivoted to the body, characterised in that the hinge plate (5) is lockable in a number of pivotal positions.

2. A backseat according to claim 1, characterised by a top hinge plate (11) which is pivotably mounted behind the top edge (31) of the backrest (2) around a pivot (13) permanently secured to the body and which has a guide slot (12) For a top pivot (10) of the backrest (2).

3. A backseat according to claim 2, characterised in that the top pivot (10) of the backrest (2) is releasable from the top hinge plate (11).

4. A backseat according to claim 1, characterised in that the cushion (4) of the seat (1) is movable forward independently of the backrest (2).

5. A backseat according to claim 4, characterised in that, when the cushion (4) is moved to the front position, its rear edge (33) is pivotable upwards and the backrest (2) is foldable forwards about the bottom pivot (3) behind the upwardly-pivoted cushion (4).

6. A backseat according to claim 5, characterised in that the cushion (4) is movably guided by a telescopic rail (15, 16) having a movable telescopic part (15) pivoted to the bottom front edge (34) of the cushion (4) and has a stationary telescopic part (16) formed with a slot (17) for engaging the head (19) of a setbolt (18) which projects from the underside (base plate 28) of the cushion (4) and which can be lifted out of the slot (17) when the cushion (4) is pushed forward.

7. A backseat according to claim 6, characterised in that the cushion (4) is lockable at its front edge (36) when in the upwardly-pivoted position.

8. A backseat according to any one of claims 1-7 for a 4-seater passenger car having a load space the front of which is bounded by the seats, characterised in that each backseat (1) has a separate backrest (2) and is individually adjustable by adjusting the backrest (2) or the cushion (4).

**Revendications**

1. siège arrière de véhicule automobile, notamment de voiture particulière à quatre ou cinq sièges, avec au moins un dossier (2) réglable, qui est susceptible de pivoter par rapport à la carrosserie du véhicule à sa zone de bordure supérieure (31) sur un axe de pivotement (10) s'étendant transversalement, tandis qu'avec son bord inférieur (30), il est susceptible d'être décalé vers l'avant indépendamment du coussin de siège (4) du siège du véhicule, et qu'il est susceptible de pivoter sur un axe inférieur de pivotement (30) s'étendant transversalement, par rapport à une plaque de charnière (5) articulée à la carrosserie, siège arrière caractérisé en ce que la plaque de charnière (5) est susceptible d'être arrêtée dans plusieurs positions de pivotement.

2. siège arrière selon la revendication 1, caractérisé en ce qu'il comporte une plaque supérieure de charnière (11) articulée de façon à pouvoir pivoter derrière le bord supérieur (31) du dossier (2) sur un axe de pivotement (13) solidaire de la carrosserie, et qui comporte une fente de guidage (12) pour l'un des axes supérieurs de pivotement (10) du dossier (2).

3. Siège arrière selon la revendication 2, caractérisé en ce que l'axe supérieur de pivotement (10) du dossier (2) est susceptible d'être enlevé de la plaque supérieure de charnière (11).

4. siège arrière selon la revendication 1, caractérisé en ce que le coussin de siège (4) du siège (1) est susceptible d'être déplacé vers l'avant, indépendamment du dossier (2).

5. siège arrière selon la revendication 4, caractérisé en ce que, dans la position déplacée vers l'avant du coussin de siège (4) celui-ci est susceptible d'être basculé vers le haut par son bord arrière (33), tandis que le dossier (2) est susceptible d'être basculé vers l'avant autour de l'axe inférieur de pivotement (3) derrière le coussin de siège (4) basculé vers 1e haut.

6. Siège arrière selon la revendication 5, caractérisé en ce que le coussin de siège (4) est guidé de façon à pouvoir coulisser au moyen d'un rail télescopique (15, 16), dont la partie télescopique mobile (15) est articulée au bord antérieur inférieur (34) du coussin de siège (4), et dans la partie télescopique fixe (16) duquel il est prévu une fente de verrouillage (17) dans laquelle un goujon (18) qui fait saillie sur la face inférieure (plaque de fond 28) du coussin de siège (4) vient en prise avec sa tête (19), qui lorsque le coussin de siège (4) est déplacé vers l'avant, est susceptible d'être soulevé de la fente de verrouillage (17).

7. Siège arrière selon la revendication 6, caractérisé en ce que le coussin de siège (4) est susceptible d'être arrêté sur son bord antérieur (34) dans sa position basculée vers le haut.

8. Siège arrière selon une des revendications 1 à 7, pour une voiture particulière à quatre sièges, dont l'espace de chargement est limité vers l'avant par les sièges arrières, caractérisé en ce que chaque siège arrière (1) comporte un dossier (2) distinct, et est susceptible d'être réglé individuellement en réglant le dossier (2) ou bien le coussin de siège (4).

Fig. 1

EP 0 211 248 B1

Fig. 2

EP 0 211 248 B1

Fig. 3

# Fig. 4

EP 0 211 248 B1

Fig. 5

Fig. 6

Fig. 7

Fig. 8

EP 0 211 248 B1

Fig. 10

Fig. 9

EP 0 211 248 B1